# EUROPÄISCHE PATENTSCHRIFT

(11) **EP 3 838 637 B1**
(45) Veröffentlichungstag und Bekanntmachung des Hinweises auf die Patenterteilung: **15.06.2022**
(21) Anmeldenummer: 20214089.3
(22) Anmeldetag: 15.12.2020
(51) Int. Cl.: B60H 1/00

(54) **LUFTFÜHRUNGSELEMENT FÜR KRAFTFAHRZEUGE**
AIR GUIDANCE ELEMENT FOR MOTOR VEHICLES
ÉLÉMENT DE GUIDAGE D'AIR POUR VÉHICULES AUTOMOBILES

(30) Priorität: 19.12.2019 DE 202019107112 U
(43) Veröffentlichungstag der Anmeldung: 23.06.2021
(73) Patentinhaber: REHAU Automotive SE & Co. KG, 95111 Rehau (DE)
(72) Erfinder: Betz, Willi, 95131 Schwarzenbach am Wald (DE); Christ, Michael, 95028 Hof (DE); Erhardt, Christian, 95185 Gattendorf (DE); Kroll, Markus, 08538 Weischlitz (DE); Schmidt, Jonas, 95445 Bayreuth (DE); Strobel, Kathrin, 95119 Naila (DE)

(56) Entgegenhaltungen:
- EP-A1- 2 985 541
- FR-A1- 2 468 076
- JP-A- 2014 231 263
- US-A1- 2005 076 668

## Beschreibung

Die vorliegende Erfindung betrifft ein Luftführungselement für Kraftfahrzeuge mit mindestens einem langgestreckten Hohlkörper dessen Innenwandung einen Luftführungskanal vorgibt, wobei der Hohlkörper entlang seiner Längserstreckungsrichtung von einem ersten Anschluss-Abschnitt in einen zweiten Abschnitt wechselt, wobei zumindest innerhalb des zweiten Abschnitts schallabsorbierende Zusatzkörper vorgesehen sind, die dem Luftführungskanal abschnittsweise oder durchgängig folgend ausgebildet und so an dem Hohlkörper befestigt sind, dass Luft, welche im Hohlkörper entlang des Luftführungskanals strömt, zusätzlich an den Zusatzkörpern entlang strömt und mit diesen wechselwirkt.

Ein gattungsgemäßes Luftführungselement kann der Gebrauchsmusterschrift DE 203 20 831 U1 entnommen werden. Weitere Luftführungselemente des Standes der Technik sind aus den Druckschriften EP 2 985 541 A1, FR 2 468 076 A1, JP 2014 231263 A und US 2005/076668 A1 bekannt.

Nachteilig an einem Luftführungselement des Stands der Technik ist dessen eingeschränkte Fähigkeit verschiedene Frequenzbänder mittels des schallabsorbierende Zusatzkörpers zu absorbieren.

Aufgabe der vorliegenden Erfindung ist es daher ein gattungsgemäßes Luftführungselement für Kraftfahrzeuge anzugeben, welches über einen weiten Frequenzbereich Schallwellen abschwächen oder zu absorbieren vermag.

Diese Aufgabe wird erfindungsgemäß gelöst durch ein Luftführungselement für Kraftfahrzeuge mit mindestens einem langgestreckten Hohlkörper dessen Innenwandung einen Luftführungskanal vorgibt, wobei der Hohlkörper entlang seiner Längserstreckungsrichtung von einem ersten Anschluss-Abschnitt in einen zweiten Abschnitt wechselt, wobei zumindest innerhalb des zweiten Abschnitts schallabsorbierende Zusatzkörper vorgesehen sind, die dem Luftführungskanal abschnittsweise oder durchgängig folgend ausgebildet und so an dem Hohlkörper befestigt sind, dass Luft, welche im Hohlkörper entlang des Luftführungskanals strömt, zusätzlich an den Zusatzkörpern entlang strömt und mit diesen wechselwirkt, wobei die Zusatzkörper eine uneinheitliche Dicke aufweisen, wobei die Dicken von innerhalb des Luftführungskanals einander gegenüberliegend angeordneter Zusatzkörper entlang der Längserstreckungsrichtung des Hohlkörpers derart variieren, dass ein Zusatzkörper in dem gleichen Ausmaß dünner wird, wie der ihm gegenüberliegende weitere Zusatzkörper oder die ihm gegenüberliegenden weiteren Zusatzkörper dicker wird oder werden und umgekehrt, sodass bei einem Querschnitt durch den Hohlkörper die Summe der Zusatzkörper-Querschnittsflächen entlang der Längserstreckungsrichtung des Hohlkörpers auf einer Länge von mindestens 66%, bevorzugt mindestens 77%, weiter bevorzugt mindestens 85% der Gesamtlänge des zweiten Abschnitts mit einer Abweichung von höchstens ±25% variiert, sodass in dem Luftführungskanal der freie Luftführungsquerschnitt innerhalb des zweiten Abschnitts entlang der Längserstreckungsrichtung des Hohlkörpers im Wesentlichen gleichbleibt.

Ein erfindungsgemäß ausgebildetes Luftführungselement ermöglicht es durch die Verwendung von sich in ihrer Dicke unterscheidenden Zusatzkörpern verschiedene Frequenzbänder zu absorbieren. Gleichzeitig werden die Zusatzkörper hierbei so in Relation zueinander angeordnet, dass bei einem Querschnitt durch den Hohlkörper die Summe der Zusatzkörper-Querschnittsflächen entlang der Längserstreckungsrichtung des Hohlkörpers mit einer Abweichung von höchstens ±25%, bevorzugt höchsten ±15%, weiter bevorzugt höchstens ±10% variiert. Hierdurch wird ermöglicht, dass der freie Luftführungsquerschnitt innerhalb des zweiten Abschnitts neben den Zusatzkörpern entlang der Längserstreckungsrichtung des Hohlkörpers im Wesentlichen gleichbleibt. So lässt sich zusätzlich die Entstehung von neuen Schallwellen durch die Beibehaltung eines möglichst gleichmäßigen freien Luftführungsquerschnitts vermeiden.

Bevorzugt beträgt der Druckverlust in Strömungsrichtung der transportierten Luft zwischen dem Lufteintritt in den zweiten Abschnitt und dem Luftaustritt aus dem zweiten Abschnitt höchsten 25%, bevorzugt höchsten 12%, weiter bevorzugt höchstens 7%.

Die von der Innenwandung umschlossene erste Querschnittsfläche in dem ersten Anschluss-Abschnitt kann bevorzugt kleiner sein, als die von der Innenwandung umschlossene zweite Querschnittsfläche in dem zweiten Abschnitt. Die Zusatzkörper sind dann hierbei derart dimensioniert, dass ihre entsprechenden Zusatzkörper-Querschnittsflächen bei einem Querschnitt durch den Hohlkörper in Summe der Differenz von zweiter Querschnittsfläche und erster Querschnittsfläche mit einer Abweichung von höchsten ±15%, bevorzugt höchsten ±10% entsprechen, sodass in dem Luftführungskanal der freie Luftführungsquerschnitt auch in dem ersten Anschluss-Abschnitt im Wesentlichen gleichbleibt.

Die Variation der Dicken der Zusatzkörper kann kontinuierlich oder gestuft erfolgen. Die Variation muss nicht stetig ansteigend oder stetig abfallend erfolgen, sondern kann auch wechselnd erfolgen.

Bevorzugt weist der langgestreckte Hohlkörper zumindest innerhalb des zweiten Abschnitts wenigstens eine Krümmung auf. Durch einen gekrümmten Verlauf des Hohlkörpers (und damit auch des Luftführungskanal) wird erreicht, dass die Schallwellen zwangsläufig mit den Zusatzkörpern in Kontakt treten müssen und daher noch effektiver absorbiert bzw. abgeschwächt werden können.

Für den Fall, dass der langgestreckte Hohlkörper zumindest innerhalb des zweiten Abschnitts wenigstens eine Krümmung aufweist kann der gesamte oder der größere Anteil des dicker werdenden Zusatzkörpers bevorzugt auf der längeren Seite des gekrümmten Bereiches (also der Krümmungsaußenseite) des Hohlkörpers angeordnet und dabei so positioniert sein, dass der im Vergleich zum Ende dünnere Anfang dieses Zusatzkörpers in Strömungsrichtung der transportierten Luft zuerst angeströmt wird.

Die Zusatzkörper können einstückig oder aus einer einzelnen Schicht oder aus mehreren Schichten aufgebaut sein. Die Zusatzkörper sind bevorzugt als flächige Zusatzkörper ausgebildet.

Die Zusatzkörper können aus einem Vliesmaterial gebildet sein. Bevorzugt umfasst das Vliesmaterial hierbei ein PET-Vliesmaterial.

In einer bevorzugten Ausführungsform weisen die der durchströmenden Luft zugewandten Seiten der Zusatzkörper zusätzlich eine mikroperforierte Oberfläche auf. Die mikroperforierte Oberfläche kann vorzugsweise durch eine mikroperforierte Folie, insbesondere eine mikroperforierte PP-Folie gebildet sein.

Die Zusatzkörper müssen nicht zwingend aus getrennt voneinander aufgebauten Elementen bestehen, sondern können untereinander stoffschlüssig verbunden oder einstückig geformt sind. Eine einstückige Ausbildung ermöglicht es die Zusatzkörper in einem einzelnen Verfahrensschritt an dem Hohlkörper zu befestigen.

Die Ausbildung der Zusatzkörper kann auch zusammen mit der Herstellung des langgestreckten Hohlkörpers erfolgen oder kombiniert werden (zum Beispiel durch ein generatives Herstellungsverfahren wie etwa ein 3-D Druckverfahren).

Der Hohlkörper kann durch wenigsten zwei miteinander verbundene Schalen gebildet sein. Die Schalen können in einem Kunststoff Spritzgussverfahren oder einem Thermo-Umformverfahren (zum Beispiel Twin-Sheet) oder mit einem generativen Herstellungsverfahren hergestellt werden.

Für den Fall, dass der Hohlkörper aus einem einzelnen Bauteil besteht eignet sich als Herstellverfahren bevorzugt das Blasformungsverfahren oder auch das generative Herstellungsverfahren.

Bevorzugt sind die Zusatzkörper an der Innenwandung des Hohlkörpers befestigt. Weiter bevorzugt sind zur Befestigung der Zusatzkörper auf der Innenwandung des Hohlkörpers formschlüssige Aufnahmen vorgesehen. Selbige formschlüssige Aufnahmen lassen sich insbesondere in einem Kunststoff-Spritzgussverfahren oder in einem generativen Herstellungsverfahren bei der Herstellung des Hohlkörpers realisieren. Die formschlüssigen Aufnahmen können insbesondere einstückig angeformte Aufnahmen sein.

Der langgestreckte Hohlkörper kann im Querschnitt rund und/oder oval und/oder viereckig und/oder vieleckig ausgebildet sein.

Im Folgenden wird die Erfindung anhand lediglich Ausführungsbeispiele darstellender Zeichnungen erläutert. Es zeigen schematisch:
- Fig. 1: einen Längsschnitt durch ein erfindungsgemäßes Luftführungselement;
- Fig. 2: eine dreidimensionale Darstellung des Luftführungselements aus Fig. 1;
- Fig. 3: eine Querschnittsdarstellung des zweiten Abschnitts des Luftführungselements aus Fig. 2;
- Fig. 4: von oben nach unten verschiedene Querschnitte durch den Hohlkörper des Luftführungselements entlang der Längserstreckungsrichtung des Hohlkörpers;
- Fig. 5: eine weitere Querschnittsdarstellung des zweiten Abschnitts des Luftführungselements;
- Fig. 6: formschlüssige Aufnahmen an dem mehrschalig ausgebildeten Hohlkörper des Luftführungselements.

Gleiche oder funktionsgleiche Elemente sind mit den gleichen Bezugszeichen versehen. Aus Gründen der Übersichtlichkeit sind in den Figuren nicht immer alle Bezugszeichen gleichzeitig dargestellt.

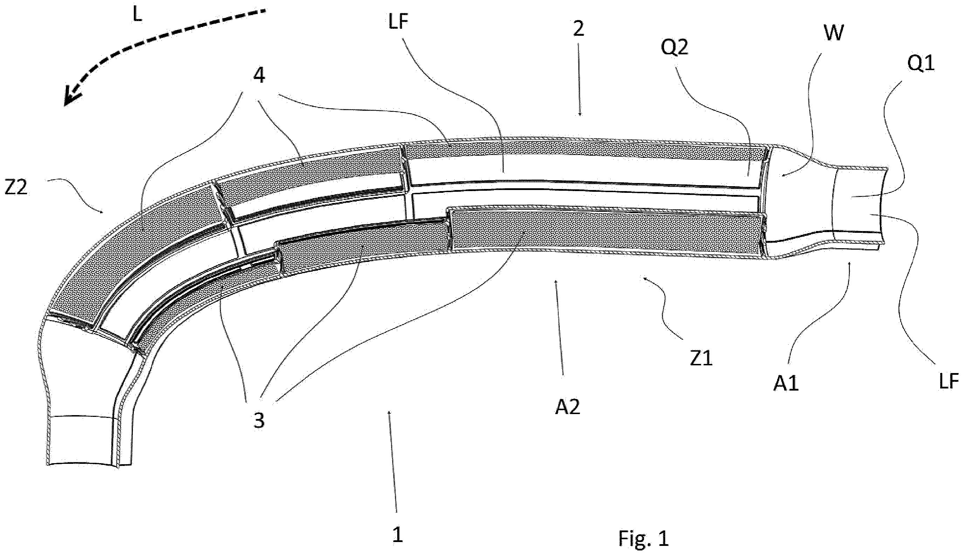

In der Fig. 1 ist ein erfindungsgemäßes Luftführungselement für Kraftfahrzeuge mit mindestens einem langgestreckten Hohlkörper 1 dessen Innenwandung W einen Luftführungskanal 2 vorgibt in einem Längsschnitt dargestellt. Der Hohlkörper 1 wechselt entlang seiner Längserstreckungsrichtung L von einem ersten Anschluss-Abschnitt A1 in einen zweiten Abschnitt A2. Zumindest innerhalb des zweiten Abschnitts A2 sind schallabsorbierende Zusatzkörper 3, 4 vorgesehen, die dem Luftführungskanal 2 abschnittsweise oder durchgängig folgend ausgebildet und so an dem Hohlkörper 1 befestigt sind, dass Luft, welche im Hohlkörper 1 entlang des Luftkanals 2 strömt, zusätzlich an den Zusatzkörpern 3, 4 entlang strömt und mit diesen wechselwirkt. Die zusammen mit der Luft transportierten Schallwellen werden an den Zusatzkörpern 3, 4 abgeschwächt oder absorbiert.

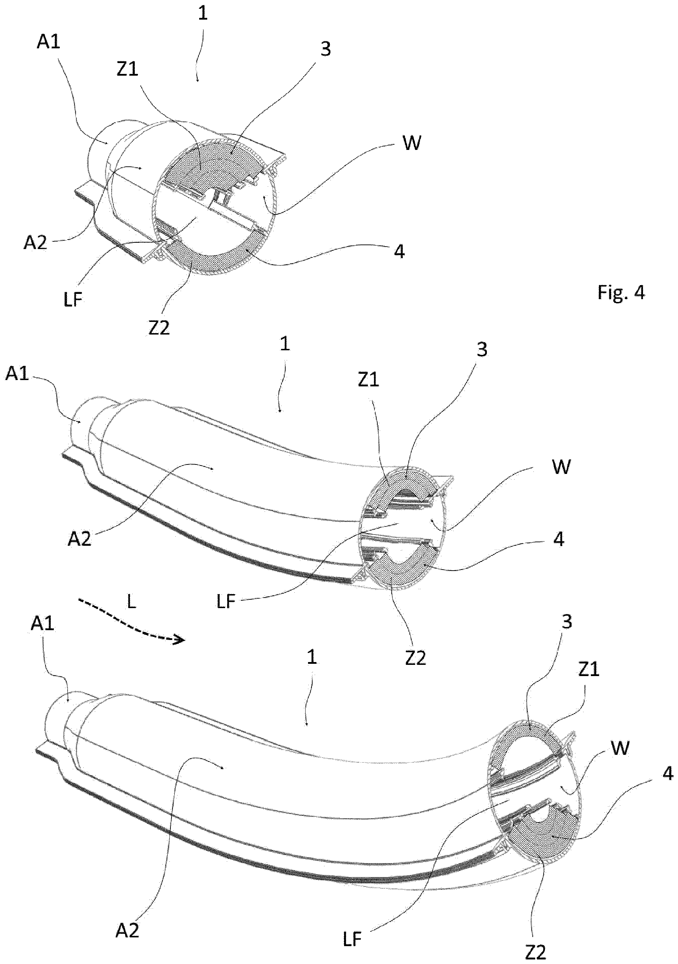

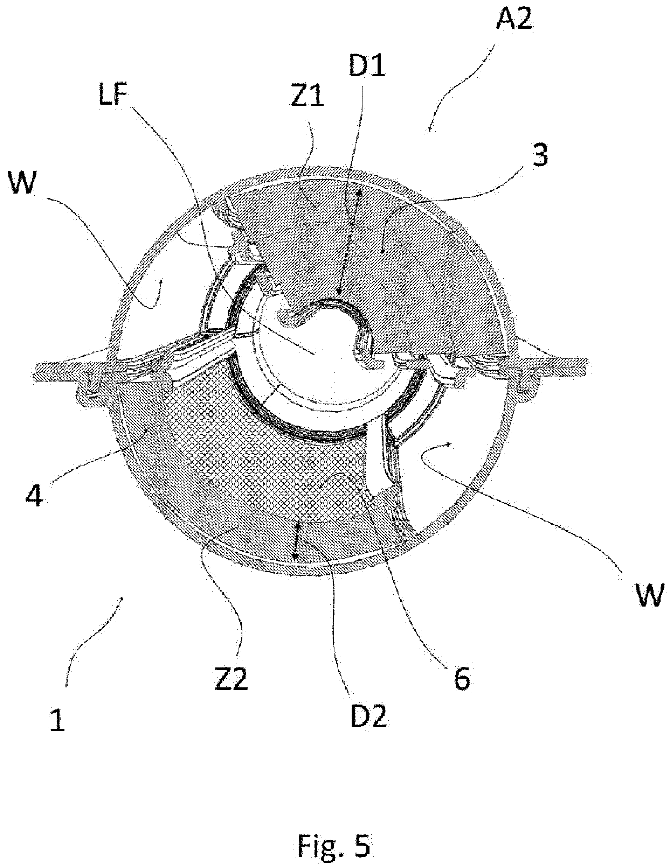

In Fig. 1 und insbesondere in Fig. 4 und Fig. 5 ist verdeutlicht, dass die Zusatzkörper 3, 4 eine uneinheitliche Dicke D1, D2 aufweisen, wobei die Dicken D1, D2 von innerhalb des Luftführungskanals 2 einander gegenüberliegend angeordneter Zusatzkörper 3, 4 entlang der Längserstreckungsrichtung L des Hohlkörpers 1 derart variieren, dass ein Zusatzkörper 3 in dem gleichen Ausmaß dünner wird, wie der ihm gegenüberliegende weitere Zusatzkörper 4 oder die ihm gegenüberliegenden weiteren Zusatzkörper 4 dicker wird oder werden und umgekehrt, sodass bei einem Querschnitt durch den Hohlkörper 1 die Summe der Zusatzkörper-Querschnittsflächen Z1, Z2 entlang der Längserstreckungsrichtung L des Hohlkörpers 1 auf einer Länge von mindestens 66%, bevorzugt mindestens 77%, weiter bevorzugt mindestens 85% der Gesamtlänge des zweiten Abschnitts (A2) mit einer Abweichung von höchstens ±15% variiert, sodass in dem Luftführungskanal 2 der freie Luftführungsquerschnitt LF innerhalb des zweiten Abschnitts A2 entlang der Längserstreckungsrichtung L des Hohlkörpers 1 im Wesentlichen gleichbleibt (vgl. hierzu insbesondere Fig. 1 und Fig. 4).

Der Druckverlust in Strömungsrichtung der transportierten Luft beträgt zwischen dem Lufteintritt in den zweiten Abschnitt A2 und dem Luftaustritt aus dem zweiten Abschnitt A2 höchsten 25%, bevorzugt höchsten 12%, weiter bevorzugt höchstens 7%.

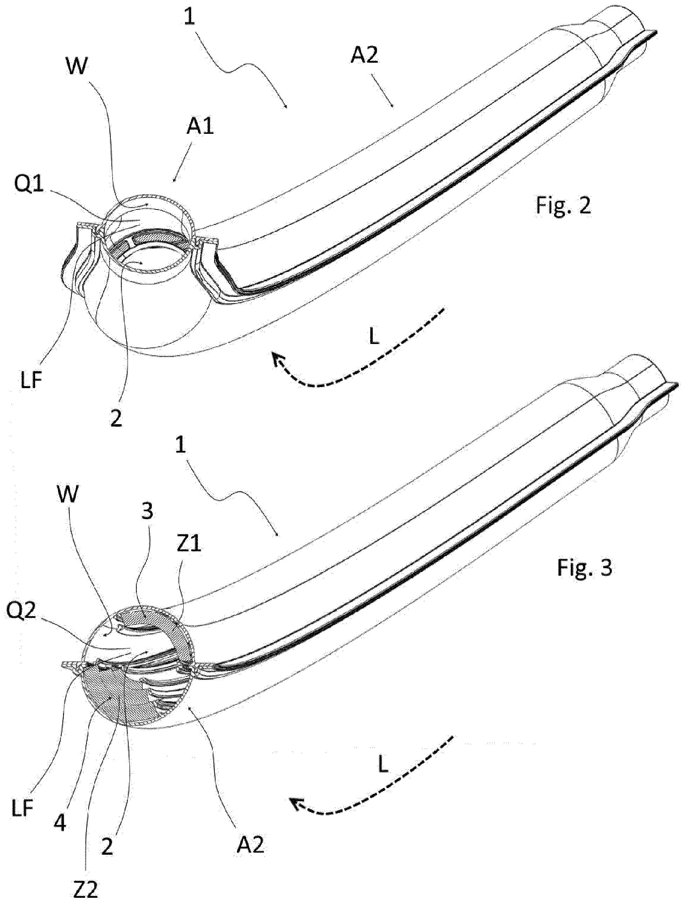

In den Fig. 2 und Fig. 3 ist dargestellt, dass die von der Innenwandung W umschlossene erste Querschnittsfläche Q1 in dem ersten Anschluss-Abschnitt A1 kleiner ist, als die von der Innenwandung W umschlossene zweite Querschnittsfläche Q2 in dem zweiten Abschnitt A2.

Die Zusatzkörper 3, 4 sind derart dimensioniert, dass ihre entsprechenden Zusatzkörper-Querschnittsflächen Z1, Z2 bei einem Querschnitt durch den Hohlkörper 1 in Summe der Differenz von zweiter Querschnittsfläche Q2 und erster Querschnittsfläche Q1 mit einer Abweichung von höchsten ±15% entsprechen, sodass in dem Luftführungskanal 2 der freie Luftführungsquerschnitt LF auch in dem ersten Anschluss-Abschnitt A1 im Wesentlichen gleichbleibt (also sich im Vergleich zu dem freien Luftführungsquerschnitt LF im zweiten Abschnitt A2 nicht wesentlich verändert).

Wie aus der Abfolge der Querschnitte in Fig. 4 dargestellt erfolgt die Variation der Dicken D1, D2 der Zusatzkörper 3, 4 in dem vorliegenden Ausführungsbeispiel gestuft. Im Rahmen der Erfindung kann die Variation der Dicken selbstredend auch kontinuierlich erfolgen. Insbesondere in Fig. 1 ist ersichtlich, dass der langgestreckte Hohlkörper 1 zumindest innerhalb des zweiten Abschnitts A2 wenigstens eine Krümmung aufweist. Der gesamte oder der größere Anteil des dicker werdenden Zusatzkörpers 3 ist hierbei auf der längeren Seite des gekrümmten Bereiches des Hohlkörpers 1 angeordnet und dabei so positioniert, dass der im Vergleich zum Ende dünnere Anfang dieses Zusatzkörpers 3 in Strömungsrichtung der transportierten Luft zuerst angeströmt wird.

Aus den Querschnitten in den Fig. 4 und Fig. 5 kann man erkennen, dass die Zusatzkörper 3, 4 aus einer einzelnen Schicht oder aus mehreren Schichten aufgebaut ist oder sind. Die Zusatzkörper 3, 4 sind in diesem Ausführungsbeispiel aus einem Vliesmaterial, vorzugsweise aus einem PET-Vliesmaterial gebildet.

In der Fig. 5 ist verdeutlicht, dass die der durchströmenden Luft zugewandten Seiten der Zusatzkörper 3, 4 zusätzlich eine mikroperforierte Oberfläche 6, vorzugsweise gebildet durch eine mikroperforierte PP-Folie aufweisen.

Die Zusatzkörper 3, 4 können untereinander stoffschlüssig verbunden oder alternativ einstückig geformt sein.

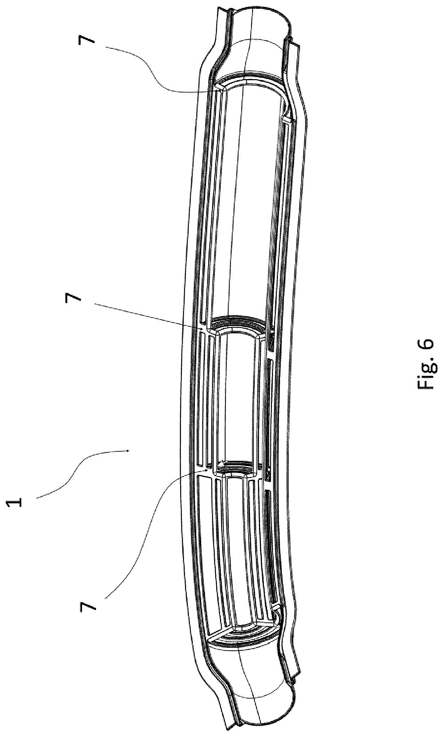

In den Querschnittsdarstellung ist erkennbar, dass der Hohlkörper 1 durch wenigsten zwei miteinander verbundene Schalen gebildet ist. In der Fig. 6 ist eine Halbschale des Hohlkörpers 1 dargestellt.

In dem vorliegenden Ausführungsbeispiel sind die Zusatzkörper 3, 4 an der Innenwandung W des Hohlkörpers 1 befestigt.

Insbesondere in der Fig. 6 ist erkennbar, dass zur Befestigung der Zusatzkörper 3, 4 auf der Innenwandung W des Hohlkörpers 1 formschlüssige Aufnahmen 7 vorgesehen sind.

Der langgestreckte Hohlkörper 1 ist im Querschnitt rund ausgebildet, könnte selbstredend aber auch oval, viereckig und/oder vieleckig ausgebildet sein.

## Patentansprüche

1. Luftführungselement für Kraftfahrzeuge mit mindestens einem langgestreckten Hohlkörper (1) dessen Innenwandung (W) einen Luftführungskanal (2) vorgibt, wobei der Hohlkörper (1) entlang seiner Längserstreckungsrichtung (L) von einem ersten Anschluss-Abschnitt (A1) in einen zweiten Abschnitt (A2) wechselt,
wobei zumindest innerhalb des zweiten Abschnitts (A2) schallabsorbierende Zusatzkörper (3, 4) vorgesehen sind, die dem Luftführungskanal (2) abschnittsweise oder durchgängig folgend ausgebildet und so an dem Hohlkörper (1) befestigt sind, dass Luft, welche im Hohlkörper (1) entlang des Luftführungskanals (2) strömt, zusätzlich an den Zusatzkörpern (3, 4) entlang strömt und mit diesen wechselwirkt, und wobei
die Zusatzkörper (3, 4) eine uneinheitliche Dicke (D1, D2) aufweisen, **dadurch gekennzeichnet, dass** die Dicken (D1, D2) von innerhalb des Luftführungskanals (2) einander gegenüberliegend angeordneter Zusatzkörper (3, 4) entlang der Längserstreckungsrichtung (L) des Hohlkörpers (1) derart variieren, dass ein Zusatzkörper (3) in dem gleichen Ausmaß dünner wird, wie der ihm gegenüberliegende weitere Zusatzkörper (4) oder die ihm gegenüberliegenden weiteren Zusatzkörper (4) dicker wird oder werden und umgekehrt, sodass bei einem Querschnitt durch den Hohlkörper (1) die Summe der Zusatzkörper-Querschnittsflächen (Z1, Z2) entlang der Längserstreckungsrichtung (L) des Hohlkörpers (1) auf einer Länge von mindestens 66%, bevorzugt mindestens 77%, weiter bevorzugt mindestens 85% der Gesamtlänge des zweiten Abschnitts (A2) mit einer Abweichung von höchstens ±25% variiert, sodass in dem Luftführungskanal (2) der freie Luftführungsquerschnitt (LF) innerhalb des zweiten Abschnitts (A2) entlang der Längserstreckungsrichtung (L) des Hohlkörpers (1) im Wesentlichen gleichbleibt.

2. Luftführungselement nach Anspruch 1, **dadurch gekennzeichnet, dass** der Druckverlust in Strömungsrichtung der transportierten Luft zwischen dem Lufteintritt in den zweiten Abschnitt (A2) und dem Luftaustritt aus dem zweiten Abschnitt (A2) höchsten 25%, bevorzugt höchsten 12%, weiter bevorzugt höchstens 7% beträgt.

3. Luftführungselement nach Anspruch 1 oder 2, **dadurch gekennzeichnet, dass** die von der Innenwandung (W) umschlossene erste Querschnittsfläche (Q1) in dem ersten Anschluss-Abschnitt (A1) kleiner ist, als die von der Innenwandung (W) umschlossene zweite Querschnittsfläche (Q2) in dem zweiten Abschnitt (A2) und, dass die Zusatzkörper (3, 4) derart dimensioniert sind, dass ihre entsprechenden Zusatzkörper-Querschnittsflächen (Z1, Z2) bei einem Querschnitt durch den Hohlkörper (1) in Summe der Differenz von zweiter Querschnittsfläche (Q2) und erster Querschnittsfläche (Q1) mit einer Abweichung von höchsten ±15% entsprechen, sodass in dem Luftführungskanal (2) der freie Luftführungsquerschnitt (LF) auch in dem ersten Anschluss-Abschnitt (A1) im Wesentlichen gleichbleibt.

4. Luftführungselement nach einem der vorstehenden Ansprüche, **dadurch gekennzeichnet, dass** die Variation der Dicken (D1, D2) der Zusatzkörper (3, 4) kontinuierlich oder gestuft erfolgt.

5. Luftführungselement nach einem der vorstehenden Ansprüche, **dadurch gekennzeichnet, dass** der langgestreckte Hohlkörper (1) zumindest innerhalb des zweiten Abschnitts (A2) wenigstens eine Krümmung aufweist.

6. Luftführungselement nach Anspruch 5, **dadurch gekennzeichnet, dass** der gesamte oder der größere Anteil des dicker werdenden Zusatzkörpers (4) auf der längeren Seite des gekrümmten Bereiches, also der Krümmungsaußenseite, des Hohlkörpers (1) angeordnet und dabei so positioniert ist, dass der im Vergleich zum Ende dünnere Anfang dieses Zusatzkörpers (4) in Strömungsrichtung der transportierten Luft zuerst angeströmt wird.

7. Luftführungselement nach einem der vorstehenden Ansprüche, **dadurch gekennzeichnet, dass** die Zusatzkörper (3, 4) aus einer einzelnen Schicht oder aus mehreren Schichten aufgebaut sind.

8. Luftführungselement nach einem der vorstehenden Ansprüche, **dadurch gekennzeichnet, dass** die Zusatzkörper (3, 4) aus einem Vliesmaterial, vorzugsweise aus einem PET-Vliesmaterial gebildet sind.

9. Luftführungselement nach einem der vorstehenden Ansprüche, **dadurch gekennzeichnet, dass** die der durchströmenden Luft zugewandten Seiten der Zusatzkörper (3, 4) zusätzlich eine mikroperforierte Oberfläche (6), vorzugsweise gebildet durch eine mikroperforierte Folie, insbesondere durch eine mikroperforierte PP-Folie, aufweisen.

10. Luftführungselement nach einem der vorstehenden Ansprüche, **dadurch gekennzeichnet, dass** die Zusatzkörper (3, 4) untereinander stoffschlüssig verbunden oder einstückig geformt sind.

11. Luftführungselement nach einem der vorstehenden Ansprüche, **dadurch gekennzeichnet, dass** der Hohlkörper (1) durch wenigsten zwei miteinander verbundene Schalen gebildet ist.

12. Luftführungselement nach einem der vorstehenden Ansprüche, **dadurch gekennzeichnet, dass** die Zusatzkörper (3, 4) an der Innenwandung (W) des Hohlkörpers (1) befestigt sind.

13. Luftführungselement nach Anspruch 12, **dadurch gekennzeichnet, dass** zur Befestigung der Zusatzkörper (3, 4) auf der Innenwandung (W) des Hohlkörpers (1) formschlüssige Aufnahmen (7), vorzugsweise einstückig angeformte Aufnahmen (7), vorgesehen sind.

14. Luftführungselement nach einem der vorstehenden Ansprüche, **dadurch gekennzeichnet, dass** der langgestreckte Hohlkörper (1) im Querschnitt rund, oval, viereckig und/oder vieleckig ausgebildet ist.

## Claims

1. An air guidance element for motor vehicles having at least one elongate hollow body (1), the inner wall (W) of which defines an air guidance duct (2), wherein the hollow body (1) changes along its direction of longitudinal extent (L) from a first connection portion (A1) into a second portion (A2),
wherein sound-absorbing auxiliary bodies (3, 4) are provided at least within the second portion (A2), are designed in a manner following the air guidance channel (2) in sections or continuously, and are fastened to the hollow body (1) such that air flowing along the air guidance channel (2) in the hollow body (1) flows additionally along and against the auxiliary bodies (3, 4) and interacts therewith,
and wherein the auxiliary bodies (3, 4) have a non-uniform thickness (D1, D2), **characterised in that** the thicknesses (D1, D2) of auxiliary bodies (3, 4) arranged opposite one another within the air guidance channel (2) vary along the direction of longitudinal extent (L) of the hollow body (1) in such a way that an auxiliary body (3) becomes thinner to the same extent as the oppositely arranged further auxiliary body (4) or the oppositely arranged further auxiliary bodies (4) becomes or become thicker, and vice versa, so that, in a cross section through the hollow body (1), the sum of the auxiliary body cross-sectional areas (Z1, Z2) in the direction of longitudinal extent (L) of the hollow body (1) varies over a length of at least 66%, preferably at least 77%, more preferably at least 85% of the total length of the second portion (A2) with a deviation of at most ±25%, so that in the air guidance duct (2) the free air guidance cross section (LF) within the second portion (A2) remains substantially the same in the direction of longitudinal extent (L) of the hollow body (1).

2. The air guidance element according to claim 1, **characterised in that** the pressure loss in the flow direction of the transported air between the air inlet into the second portion (A2) and the air outlet from the second portion (A2) is at most 25%, preferably at most 12%, more preferably at most 7%.

3. The air guidance element according to claim 1 or 2, **characterised in that** the first cross-sectional area (Q1), surrounded by the inner wall (W), in the first connection portion (A1) is smaller than the second cross-sectional area (Q2), surrounded by the inner wall (W), in the second portion (A2), and **in that** the auxiliary bodies (3, 4) are dimensioned in such a way that their corresponding auxiliary body cross-sectional faces (Z1, Z2) in a cross section through the hollow body (1) in sum correspond to the difference of second cross-sectional area (Q2) and first cross-sectional area (Q1) with a deviation of at most ±15%, so that in the air guidance duct (2) the free air guidance cross section (LF) also remains substantially the same in the first connection portion (A1).

4. The air guidance element according to one of the preceding claims, **characterised in that** the variations in thicknesses (D1, D2) of the auxiliary bodies (3, 4) are continuous or are provided in a stepped manner.

5. The air guidance element according to one of the preceding claims, **characterised in that** the elongate hollow body (1) has at least one curvature at least within the second portion (A2).

6. The air guidance element according to claim 5, **characterised in that** the entire or the majority of the auxiliary body (4) becoming thicker is arranged on the longer side of the curved region, that is to say the outer side of the curvature, of the hollow body (1) and at the same time is positioned such that the flow of transported air, in the flow direction thereof, is incident firstly against the start of this auxiliary body (4), which is thinner in comparison to the end.

7. The air guidance element according to one of the preceding claims, **characterised in that** the auxiliary bodies (3, 4) are constructed from an individual layer or from a plurality of layers.

8. The air guidance element according to one of the preceding claims, **characterised in that** the auxiliary bodies (3, 4) are formed from a nonwoven material, preferably from a PET nonwoven material.

9. The air guidance element according to one of the preceding claims, **characterised in that** the sides of the auxiliary bodies (3, 4) facing the air that flows through additionally have a micro-perforated surface (6), preferably formed by a micro-perforated film, in particular by a micro-perforated PP film.

10. The air guidance element according to one of the preceding claims, **characterised in that** the auxiliary bodies (3, 4) are connected to one another in an integrally bonded manner or are formed in one piece.

11. The air guidance element according to one of the preceding claims, **characterised in that** the hollow body (1) is formed by at least two interconnected shells.

12. The air guidance element according to one of the preceding claims, **characterised in that** the auxiliary bodies (3, 4) are fastened to the inner wall (W) of the hollow body (1).

13. The air guidance element according to claim 12, **characterised in that** form-fitting receptacles (7), preferably integrally moulded receptacles (7), are provided on the inner wall (W) of the hollow body (1) for the fastening of the auxiliary bodies (3, 4).

14. The air guidance element according to one of the preceding claims, **characterised in that** the elongate hollow body (1) is round, oval, square and/or polygonal in cross section.

## Revendications

1. Elément de guidage d'air pour des véhicules à moteur avec au moins un corps creux (1) étiré en longueur, dont la paroi intérieure (W) spécifie un canal de guidage d'air (2), dans lequel le corps creux (1) passe d'une première section de raccordement (A1) dans une deuxième section (A2) le long de son sens d'extension longitudinale (L),
dans lequel sont prévus, au moins à l'intérieur de la deuxième section (A2), des corps supplémentaires (3, 4) d'absorption de bruits, qui sont réalisés de manière à suivre par endroits ou en continu le canal de guidage d'air (2) et son fixés de telle sorte sur le corps creux (1) que de l'air, qui circule dans le corps creux (1) le long du canal de guidage d'air (2), circule en supplément le long des corps supplémentaires (3, 4) et interagit avec ceux-ci, et dans lequel
les corps supplémentaires (3, 4) présentent une épaisseur (D1, D2) inégale, **caractérisé en ce que** les épaisseurs (D1, D2) de corps supplémentaires (3, 4) disposés de manière à se faire face les uns les autres à l'intérieur du canal de guidage d'air (2) varient le long du sens d'extension longitudinale (L) du corps creux (1) de telle manière qu'un corps supplémentaire (3) devient plus fin au fur et à mesure que l'autre corps supplémentaire (4) lui faisant face ou que les autres corps supplémentaires (4) lui faisant face devient ou deviennent plus épais et inversement, si bien que pour une section transversale à travers le corps creux (1), la somme des faces de section transversale de corps supplémentaires (Z1, Z2) varie le long du sens d'extension longitudinale (L) du corps creux (1) sur une longueur d'au moins 66 %, de manière préférée d'au moins 77 %, de manière davantage préférée d'au moins 85 % de la longueur totale de la deuxième section (A2) avec un écart au maximum de ± 25 % si bien que la section transversale de guidage d'air libre (LF) à l'intérieur de la deuxième section (A2) reste sensiblement constante le long du sens d'extension longitudinale (L) du corps creux (1) dans le canal de guidage d'air (2).

2. Elément de guidage d'air selon la revendication 1, **caractérisé en ce que** la perte de pression est de 25 % au maximum, de manière préférée de 12 % au maximum, idéalement de 7 % au maximum dans le sens d'écoulement de l'air transporté entre l'entrée d'air dans la deuxième section (A2) et la sortie d'air hors de la deuxième section (A2).

3. Elément de guidage d'air selon la revendication 1 ou 2, **caractérisé en ce que** la première face de section transversale (Q1) entourée par la paroi intérieure (W) est inférieure dans la première section de raccordement (A1) à la deuxième face de section transversale (Q2), entourée par la paroi intérieure (W), dans la deuxième section (A2), et que les corps supplémentaires (3, 4) sont dimensionnés de telle manière que leurs faces de section transversale de corps supplémentaire (Z1, Z2) correspondantes correspondent, pour une section transversale à travers le corps creux (1), en cumulé, à la différence de la deuxième face de section transversale (Q2) et de la première face de section transversale (Q1) avec un écart de ± 15 % au maximum si bien que la section transversale de guidage d'air libre (LF) également dans la première section de raccordement (A1) reste sensiblement constante dans le canal de guidage d'air (2).

4. Elément de guidage d'air selon l'une quelconque des revendications précédentes, **caractérisé en ce que** la variation des épaisseurs (D1, D2) des corps supplémentaires (3, 4) a lieu en continu ou de manière progressive.

5. Elément de guidage d'air selon l'une quelconque des revendications précédentes, **caractérisé en ce que** le corps creux (1) étiré en longueur présente au moins une incurvation du moins à l'intérieur de la deuxième section (A2).

6. Elément de guidage d'air selon la revendication 5, **caractérisé en ce que** la totalité ou la plus grande partie du corps supplémentaire (4) devenant plus épais est disposée sur le côté le plus long de la zone incurvée, donc le côté extérieur de l'incurvation, du corps creux (1) et est ce faisant positionnée de telle sorte que le début dudit corps supplémentaire (4) plus fin en comparaison avec la fin est d'abord soumis à un écoulement dans le sens d'écoulement de l'air transporté.

7. Elément de guidage d'air selon l'une quelconque des revendications précédentes, **caractérisé en ce que** les corps supplémentaires (3, 4) sont élaborés à partir d'une couche individuelle ou à partir de plusieurs couches.

8. Elément de guidage d'air selon l'une quelconque des revendications précédentes, **caractérisé en ce que** les corps supplémentaires (3, 4) sont formés à partir d'un matériau en non-tissé, de préférence à partir d'un matériau en non-tissé en PET.

9. Elément de guidage d'air selon l'une quelconque des revendications précédentes, **caractérisé en ce que** les côtés, tournés vers l'air traversant, des corps supplémentaires (3, 4) présentent en supplément une surface microperforée (6), de préférence formée par un film microperforé, en particulier par un film en PP microperforé.

10. Elément de guidage d'air selon l'une quelconque des revendications précédentes, **caractérisé en ce que** les corps supplémentaires (3, 4) sont reliés entre eux par liaison de matière ou sont formés d'un seul tenant.

11. Elément de guidage d'air selon l'une quelconque des revendications précédentes, **caractérisé en ce que** le corps creux (1) est formé par au moins deux coques reliées l'une à l'autre.

12. Elément de guidage d'air selon l'une quelconque des revendications précédentes, **caractérisé en ce que** les corps supplémentaires (3, 4) sont fixés sur la paroi intérieure (W) du corps creux (1).

13. Elément de guidage d'air selon la revendication 12, **caractérisé en ce que** sont prévus, pour la fixation des corps supplémentaires (3, 4), sur la paroi intérieure (W) du corps creux (1) des logements (7) à complémentarité de forme, de préférence des logements (7) formés d'un seul tenant.

14. Elément de guidage d'air selon l'une quelconque des revendications précédentes, **caractérisé en ce que** le corps creux (1) étiré en longueur est réalisé dans la section transversale de manière ronde, ovale, quadrangulaire et/ou polygonale.
